# EUROPEAN PATENT APPLICATION

(11) **EP 4 527 895 A1**
(43) Date of publication of application: **26.03.2025**
(21) Application number: 23807379.5
(22) Date of filing: 21.04.2023
(51) Int. Cl.: C08L 83/04, C08G 77/42, C08G 77/48, C08L 83/10

(54) **HEAT RESISTANT SILICONE OIL COMPOSITION**

(30) Priority: 18.05.2022 JP 2022081239
(71) Applicant: SHIN-ETSU CHEMICAL CO., LTD., Tokyo 1000005 (JP)
(72) Inventor: FUJITA Shoji, Annaka-shi, Gunma 379-0224 (JP)
(74) Representative: Angerhausen, Christoph
(86) International application number: PCT/JP2023/015850
(87) International publication number: WO 2023/223767

(57) **Abstract**

Provided is a silicone oil composition that does not result in, for example, separation or sedimentation even during long-term storage and exhibits excellent heat resistance. The heat-resistant silicone oil composition includes: (A) 100 parts by mass of an organopolysiloxane having a kinematic viscosity of 50 to 5,000 mm²/s at 25°C as measured using a Cannon-Fenske viscometer according to the method stipulated in JIS Z8803:2011; and (B) 10 to 100 parts by mass of a (poly)thiophene-(poly)siloxane block copolymer having a structure represented by the following formula (1): 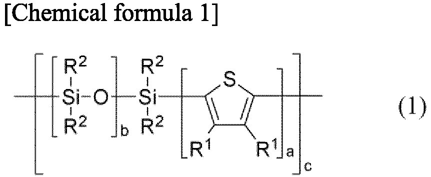 wherein each R¹ independently represents a hydrogen atom or a hydrocarbon group having 1 to 10 carbon atoms, each R² independently represents a hydrocarbon group having 1 to 10 carbon atoms, a is a number of 1 to 3, b is a number of 2 to 200, and c is a number of 1 to 40.

## Description

### Technical Field

The present invention relates to a heat resistant silicone oil composition.

### Background Art

Silicone oils have heretofore been used for applications to, for example, lubricating oils and hydraulic oils. Particularly, phenyl silicone oils containing, for example, phenyl groups or 2-phenylpropyl groups are frequently used in applications requiring heat resistance. However, these phenyl silicone oils lack sufficient heat resistance and produce aromatic hydrocarbons during thermal decomposition, leading to issues in both performance and safety.

Methods of formulating various heat resistance enhancers in silicone oil have been discussed. In addition, heat resistance enhancers for use in hydrocarbon-based lubricating oils such as metallic soap or aromatic amine are also used in silicone oils. However, these heat resistance enhancers lack sufficient compatibility with silicone oils, and their effectiveness in improving heat resistance has never been satisfactory.

Patent document 1 discloses an attempt to enhance heat resistance using fullerene formulated in a silicone oil. However, the fullerene is solid and insufficient in respect of compatibility with silicone oils, leading to issues in, for example, separation or sedimentation during long-term storage.

In view of the above, there has been a demand for the development of a silicone oil composition that is excellent in heat resistance and does not result in, for example, separation or sedimentation even during long-term storage.

### Prior Art Documents

### Patent documents

Patent document 1: JP-A-2005-206761

### Summary of Invention

### Technical Problem

Thus, it is an object of the present invention to provide a silicone oil composition that has excellent heat resistance and does not result in, for example, separation or sedimentation even during long-term storage.

### Solution to Problem

The inventor of the present invention diligently conducted a series of studies to solve the above problems, and found out that a silicone oil composition having a silicone oil and a (poly)thiophene-(poly)siloxane block copolymer does not result in, for example, separation or sedimentation even during long-term storage and is excellent in heat resistance, thus completing the invention.

The present invention provides a heat resistant silicone oil composition as set forth below.
<1> A heat resistant silicone oil composition comprising:
   (A) 100 parts by mass of an organopolysiloxane having a kinematic viscosity of 50 to 5,000 mm²/s at 25°C as measured using a Cannon-Fenske viscometer according to the method stipulated in JIS Z8803:2011; and
   (B) 10 to 100 parts by mass of a (poly)thiophene-(poly)siloxane block copolymer having a structure represented by the following formula (1): 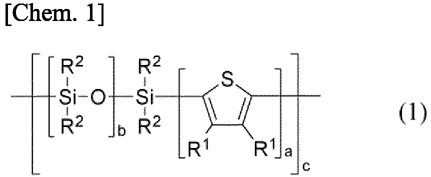 wherein, in the formula, each R¹ independently represents a hydrogen atom or a hydrocarbon group having 1 to 10 carbon atoms, each R² independently represents a hydrocarbon group having 1 to 10 carbon atoms, a is a number of 1 to 3, b is a number of 2 to 200, and c is a number of 1 to 40.
<2> The heat resistant silicone oil composition according to <1>, wherein the component (A) is dimethylpolysiloxane.
<3> The heat resistant silicone oil composition according to <1> or <2>, wherein the component (B) is a (poly)thiophene-(poly)siloxane block copolymer represented by the following formula (2): 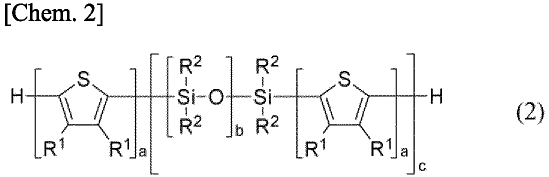 wherein, in the formula, each R¹ independently represents a hydrogen atom or a hydrocarbon group having 1 to 10 carbon atoms, each R² independently represents a hydrocarbon group having 1 to 10 carbon atoms, a is independently a number of 1 to 3, b is a number of 2 to 200, and c is a number of 1 to 40.

### Advantageous Effects of Invention

The present invention may provide a silicone oil composition that does not result in, for example, separation or sedimentation even during long-term storage and exhibits excellent heat resistance under a high temperature of 300°C or higher. The silicone oil composition of the present invention is suitable for applications such as heat transfer media, mold release agents, and resin modifiers.

### Description of Embodiments

The present invention will be described in detail hereunder.

### [(A) Organopolysiloxane]

The organopolysiloxane serving as the component (A) of the present invention is characterized by having a kinematic viscosity of 50 to 5,000 mm²/s, preferably 100 to 1,000 mm²/s, more preferably 100 to 500 mm²/s, at 25°C as measured using a Cannon-Fenske viscometer according to the method stipulated in JIS Z8803:2011. A kinetic viscosity of less than 50 mm²/s may cause the component (A) itself to become prone to volatilization at high temperatures, or prevent it from archiving the desired properties as a silicone oil. In addition, a kinetic viscosity exceeding 5,000 mm²/s may cause it to have deteriorated compatibility with component (B), which will be described later, or deteriorate its handleability.

The organopolysiloxane may have molecular structure whose molecular chain may be linear or partially branched, but it is preferred that the organopolysiloxane be a linear organopolysiloxane represented by the following formula (3): 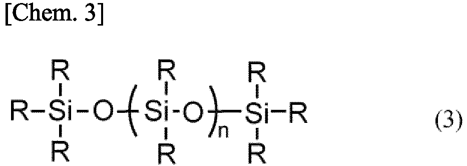 wherein, in the formula, Rs are each independently a group selected from an alkyl group having 1 to 10 carbon atoms, an aryl group having 6 to 10 carbon atoms, and an aralkyl group having 7 to 10 carbon atoms, and n is a number of 30 to 700.

Here, Rs are each independently a group selected from an alkyl group having 1 to 10, preferably 1 to 6, carbon atoms, an aryl group having 6 to 10, preferably 6 to 8, carbon atoms, and an aralkyl group having 7 to 10, preferably 7 to 8, carbon atoms. Examples of the alkyl group include a methyl group, an ethyl group, a propyl group, a butyl group, a pentyl group, a hexyl group, a heptyl group, an octyl group, a nonyl group, a decyl group, a cyclopentyl group, and a cyclohexyl group. Examples of the aryl group include a phenyl group and a tolyl group. Examples of the aralkyl group include a benzyl group and a 2-phenylpropyl group. Of these, an alkyl group is preferable, and a methyl group is particularly preferable. R may be the same or different, but it is preferred that 90% or more of all Rs be methyl groups, and it is more preferred that all Rs be methyl groups.

The component (A) of the present invention may use an ingredient containing a reduced amount of low-molecular siloxane, such as cyclosiloxane, to reduce the amount of volatile components at high temperature. Specifically, it is preferred that the total amount of cyclopolysiloxane having 3 to 20 silicon atoms (D3 to D20) be 3,000 ppm or less, and more preferably between 100 and 2,000 ppm. The amounts kept within these ranges may prevent contamination of the surrounding environment and the occurrence of problems such as electrical contact failure.

### [(B) (Poly)thiophene-(poly)siloxane block copolymer]

The (poly)thiophene-(poly)siloxane block copolymer serving as the component (B) of the present invention contains a structure represented by the following formula (1), and is preferably a (poly)thiophene-(poly)siloxane block copolymer represented by the following formula (2). This component (B) is a component that imparts heat resistance to the heat resistant silicone oil composition of the present invention.

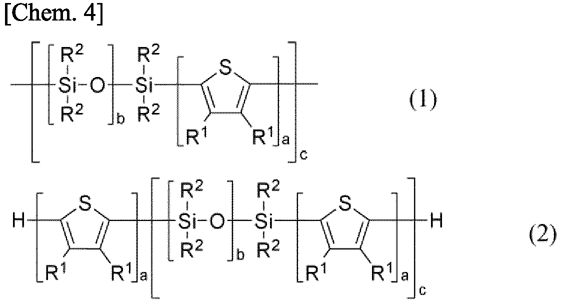

In the formulae (1) and (2), each R¹ independently represents a hydrogen atom or a hydrocarbon group having 1 to 10 carbon atoms. Examples of the hydrocarbon group having 1 to 10 carbon atoms include an alkyl group such as a methyl group, an ethyl group, a propyl group, a butyl group, a pentyl group, a hexyl group, a heptyl group, an octyl group, a nonyl group and a decyl group; a cycloalkyl group such as a cyclopentyl group and a cyclohexyl group; an aryl group such as a phenyl group and a tolyl group; and an alkenyl group such as a vinyl group and an allyl group. Of these, preferred are a hydrogen atom and an alkyl group, and more preferred is a hydrogen atom.

In the formulae (1) and (2), each R² independently represents a hydrocarbon group having 1 to 10 carbon atoms. Examples of the hydrocarbon group having 1 to 10 carbon atoms include an alkyl group such as a methyl group, an ethyl group, a propyl group, a butyl group, a pentyl group, a hexyl group, a heptyl group, an octyl group, a nonyl group and a decyl group; a cycloalkyl group such as a cyclopentyl group and a cyclohexyl group; an aryl group such as a phenyl group and a tolyl group; and an alkenyl group such as a vinyl group and an allyl group. Of these, preferred is an alkyl group, and more preferred is a methyl group.

In the formulae (1) and (2), a is independently a number of 1 to 3, preferably 1 to 2, and more preferably 1. In the formulae (1) and (2), b is a number of 2 to 200, preferably 4 to 200, more preferably 4 to 100. In the formulae (1) and (2), c is a number of 1 to 40, preferably 1 to 30, more preferably 1 to 20. The amounts kept within these ranges allow it to have an excellent compatibility with the organopolysiloxane of the component (A) and make the composition of the present invention excellent in heat resistance.

In the present invention, the bonding pattern of the (poly)thiophene-(poly)siloxane units (formula (1)) is either linear or cyclic.

Further, the component (B) of the present invention may use an ingredient containing a reduced amount of low-molecular siloxane, such as cyclopolysiloxane, to reduce the amount of volatile components at high temperature. Specifically, it is preferred that the total amount of cyclosiloxanes having 3 to 20 silicon atoms (D3 to D20) be 3,000 ppm or less, and more preferably between 100 and 2,000 ppm. The amounts kept within this range may prevent contamination of the surrounding environment and the occurrence of problems such as electrical contact failure.

It is preferred that an amount of the component (B) contained therein be 10 to 100 parts by mass, preferably 15 to 50 parts by mass, per 100 parts by mass of the organopolysiloxane of the component (A). An amount of 10 parts by mass or less may fail to impart sufficient heat resistance to the composition of the present invention while an amount exceeding 100 parts by mass may deteriorate its compatibility with the component (A) or impair the properties unique to the silicone oil of the component (A).

Here, it is preferred that the total amount of the components (A) and (B) in the composition of the present invention be 90 to 100%, more preferably 95 to 100%, and even more preferably 98 to 100%.

### [Further Component]

A further component other than the components (A) and (B) may be added into the heat resistant silicone oil composition of the present invention so long as the advantage effects of the present invention are not impaired. Examples of such further component other than the components (A) and (B) include, for example, a heat resistance enhancer such as metallic soap or aromatic amine.

### [Method of manufacturing heat resistant silicone oil composition]

A known technique may be used for a method of mixing liquid substances for manufacturing the heat resistant silicone oil composition of the present invention. Particularly, since the component (B) of the present invention is excellent in compatibility with the component (A), a uniform composition may be obtained by simply mixing the ingredients at room temperature (25°C).

When a component other than the components (A) and (B) is added to the composition of the present invention, it is preferred that this component be dispersed in advance in a silicone oil using a known method, which is then simply mixed thereinto at room temperature (25°C).

### Examples

The present invention will be described in more detail hereunder with reference to working and comparative examples, but they can be modified as appropriate without departing from the spirit of the present invention. Therefore, the scope of the present invention should not be construed as being limited to the specific examples shown below.

The kinematic viscosity of the organopolysiloxane as used herein refers to a value at 25°C as measured using a Cannon-Fenske viscometer according to the method stipulated in JIS Z8803:2011.

A silicone oil composition of the present invention was evaluated as being heat resistant when it satisfies a criterion that "the silicone oil composition exhibited a weight loss percentage of 10% or less after being heated in an air atmosphere at 300°C for 6 hours, and it maintains oily appearance and exhibits no separation, sedimentation, or other similar phenomena" whereas the composition was evaluated as having no heat resistance when it does not satisfy this criterion.

### Working Example 1

18 parts by mass of the (poly)thiophene-(poly)siloxane block copolymer represented by the formula (4) as defined below was added into 100 parts by mass of dimethylpolysiloxane having a kinematic viscosity of 100 mm²/s at 25°C, which was then stirred for 15 minutes at room temperature (25°C). The resultant silicone composition was placed into an oven at 300°C and heated under an air atmosphere for 6 hours, resulting in a weight loss percentage of 8.2%. The composition maintained an oily appearance after the heating test and exhibited no separation, sedimentation, or other similar phenomena. The silicone composition of Working Example 1 was heat resistant.

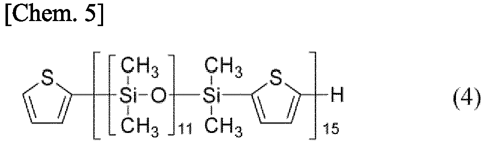

### Working Example 2

33 parts by mass of the (poly)thiophene-(poly)siloxane block copolymer represented by the formula (4) as defined above was added into 100 parts by mass of dimethylpolysiloxane having a kinematic viscosity of 100 mm²/s at 25°C, which was then stirred for 15 minutes at room temperature (25°C). The resultant silicone composition was placed into an oven at 300°C and heated under an air atmosphere for 6 hours, resulting in a weight loss percentage of 6.8%. The composition maintained an oily appearance after the heating test and exhibited no separation, sedimentation, or other similar phenomena. The silicone composition of Working Example 2 was heat resistant.

### Working Example 3

18 parts by mass of the (poly)thiophene-(poly)siloxane block copolymer represented by the formula (4) as defined above was added into 100 parts by mass of dimethylpolysiloxane having a kinematic viscosity of 2000 mm²/s at 25°C, which was then stirred for 15 minutes at room temperature (25°C). The resultant silicone composition was placed into an oven at 300°C and heated under an air atmosphere for 6 hours, resulting in a weight loss percentage of 4.0%. The composition maintained an oily appearance after the heating test and exhibited no separation, sedimentation, or other similar phenomena. The silicone composition of Working Example 3 was heat resistant.

### Comparative Example 1

A dimethylpolysiloxane having a kinematic viscosity of 100 mm²/s at 25°C was placed into an oven at 300°C and heated under an air atmosphere for 6 hours, resulting in a weight loss percentage of 29.5%. The composition lost fluidity and turned into a gel state after the heating test. The dimethylpolysiloxane of Comparative Example 1 had no heat resistance.

### Comparative Example 2

A dimethylpolysiloxane having a kinematic viscosity of 2,000 mm²/s at 25°C was placed into an oven at 300°C and heated under an air atmosphere for 6 hours, resulting in a weight loss percentage of 17.5%. The composition lost fluidity and turned into a gel state after the heating test. The dimethylpolysiloxane of Comparative Example 2 had no heat resistance.

## Claims

1. A heat resistant silicone oil composition comprising:
(A) 100 parts by mass of an organopolysiloxane having a kinematic viscosity of 50 to 5,000 mm²/s at 25°C as measured using a Cannon-Fenske viscometer according to the method stipulated in JIS Z8803:2011; and
(B) 10 to 100 parts by mass of a (poly)thiophene-(poly)siloxane block copolymer having a structure represented by the following formula (1): 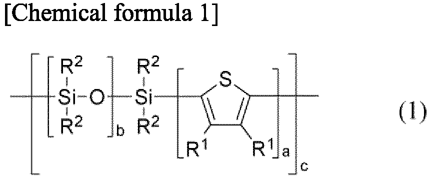 wherein, in the formula, each R¹ independently represents a hydrogen atom or a hydrocarbon group having 1 to 10 carbon atoms, each R² independently represents a hydrocarbon group having 1 to 10 carbon atoms, a is a number of 1 to 3, b is a number of 2 to 200, and c is a number of 1 to 40.

2. The heat resistant silicone oil composition according to claim 1, wherein the component (A) is dimethylpolysiloxane.

3. The heat resistant silicone oil composition according to claim 1 or 2, wherein the component (B) is a (poly)thiophene-(poly)siloxane block copolymer represented by the following formula (2): 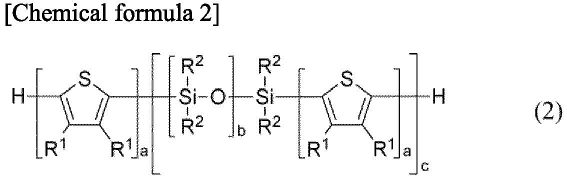 wherein, in the formula, each R¹ independently represents a hydrogen atom or a hydrocarbon group having 1 to 10 carbon atoms, each R² independently represents a hydrocarbon group having 1 to 10 carbon atoms, a is independently a number of 1 to 3, b is a number of 2 to 200, and c is a number of 1 to 40.
